# EUROPEAN PATENT APPLICATION

(11) **EP 4 702 894 A1**
(43) Date of publication of application: **04.03.2026**
(21) Application number: 24197921.0
(22) Date of filing: 02.09.2024
(51) Int. Cl.: A47J 31/58, A47J 31/52, A47J 31/44

(54) **ASSESSING AT LEAST ONE ACTUAL ASPECT OF A CONTAINER OF A BEVERAGE MAKER**

(71) Applicant: Versuni Holding B.V., 1082 MD Amsterdam (NL)
(72) Inventor: HOLWERDA, Simon Renze, 1082 MD Amsterdam (NL); LOOPSTRA, Kasper Roelof, 1082 MD Amsterdam (NL); KOC, Yusuf, 1082 MD Amsterdam (NL); DE MATTEIS, Enrico, 1082 MD Amsterdam (NL); D ABUNDO, Giuseppe, 1082 MD Amsterdam (NL); RIJSKAMP, Peter, 1082 MD Amsterdam (NL); SINNEMA, Anke Gerda, 1082 MD Amsterdam (NL)
(74) Representative: Vollering, Stefanus Franciscus Maria

(57) **Abstract**

In the context of beverage makers comprising a container (3) for holding a liquid, a level (8) and/or a level change of the liquid in the container (3) is detected, and at least one characteristic of an outgoing flow of the liquid is also measured. The liquid level-related information and liquid flow-related information obtained in this way are combined in a procedure of assessing by means of a processor (10) at least one actual aspect of the container (3) such as presence or absence of an accessory in the container (3).

## Description

### FIELD OF THE INVENTION

The invention relates to a beverage maker, comprising: a container configured to contain a liquid, and a liquid level sensor arrangement configured to detect a level and/or a level change of the liquid in the container.

### BACKGROUND OF THE INVENTION

A well-known example of a beverage maker is a coffee maker configured to perform a coffee making process. In practical cases, a coffee maker is equipped with at least one container for holding a liquid, such as a container for holding water for use in the coffee making process. Usually, the container is at least partially made from transparent material, so that a user of the beverage maker may visually check the content of the container and take measures as appropriate, such as filling the container with the liquid when the level of the liquid is low or the container is completely empty. Further, it is known to have systems for automatically checking the liquid level in the container, such as for the purpose of automatically providing a warning signal when the liquid level is lower than an allowable minimum. Such systems may comprise one or more sensors of a suitable type.

### SUMMARY OF THE INVENTION

It is an object of the invention to provide a reliable and accurate system which is suitable to be used in a beverage maker for assessing at least one actual aspect of a container of the beverage maker. The above-mentioned liquid level is one practical example of an actual aspect of such a container. In the context of the invention, it is intended to open possibilities to assess one or more other aspects if so desired.

The invention provides a beverage maker, comprising: a container configured to contain a liquid, and a liquid level sensor arrangement configured to detect a level and/or a level change of the liquid in the container, and further comprising: a liquid flow meter arrangement configured to measure at least one characteristic of an outgoing flow of the liquid, and a processor configured to receive information from the liquid level sensor arrangement representing a detected level and/or a detected level change of the liquid in the container, to receive information from the liquid flow meter arrangement representing at least one measured characteristic of an outgoing flow of the liquid, and to process both the information received from the liquid level sensor arrangement and the information received from the liquid flow meter arrangement in a procedure of assessing at least one actual aspect of the container.

It follows from the foregoing definition of the beverage maker according to the invention that the invention combines a liquid level sensor arrangement with a liquid flow meter arrangement. Output of both arrangements is processed by means of a processor for the purpose of assessing at least one actual aspect of the container of the beverage maker, which is useful for various purposes, such as choosing appropriate parameters for controlling operation of the beverage maker and communicating information to a user of the beverage maker. The fact that two types of information are collected in relation to one container, namely, liquid level-related information and liquid flow-related information, is at the basis of many interesting options as will be defined and further explained below.

In the context of the invention, a value of interest is a value representing level change of the liquid in the container per volume of drained liquid, and it is possible that calculating this value is included in the procedure of assessing the at least one actual aspect of the container. The value can be used to advantage in various ways. In the first place, it is possible that the container is configured to accommodate an accessory such as a filter of the liquid, and that the at least one actual aspect of the container is presence or absence of the accessory in the container. In that case, the invention provides a reliable way of determining presence or absence of the accessory in the container, namely, by providing an action of comparing the calculated value to a reference value related to the presence of the accessory in the container and/or a reference value related to the absence of the accessory in the container. In the second place, it is possible that the accessory is one of a range of accessories of different size and/or shape. In that case, the invention provides a reliable way of determining which one of the accessories is present in the container, namely, by providing an action of comparing the calculated value to respective reference values related to respective accessories from the range. Likewise, in the third place, it is possible that the container is one of a range of containers of different size and/or shape. In that case, the invention provides a reliable way of determining which one of the containers is present in the beverage maker, namely, by providing an action of comparing the calculated value to respective reference values related to respective containers from the range. It is to be noted that combinations are possible in the context of the invention, i.e., combinations of at least two of the three above-mentioned applications of the value representing level change of the liquid in the container per volume of drained liquid.

Another actual aspect of the container which can be determined by the processor is presence or absence of a loose object in the container, in which case it is advantageous if the procedure of assessing the at least one actual aspect of the container includes determining whether or not a level change of the liquid in the container is zero under circumstances in which the information received from the liquid flow meter arrangement indicates an actual outgoing flow of the liquid. When it is found that liquid drains from the container but no level change of the liquid in the container is detected, this may be an indication that the liquid level sensor arrangement detects a fixed surface instead of the actual liquid level. This in turn may imply presence of a loose object in the container. Such a loose object may be an object which should not be present in the container whatsoever (hereinafter also referred to as a foreign object), but it may also be an object which is intended to be used with the container but which has not been properly placed in the container. It is to be noted that other situations are feasible in which the action of determining whether or not a level change of the liquid in the container is zero under circumstances in which the information received from the liquid flow meter arrangement indicates an actual outgoing flow of the liquid can be relevant. One practical example is a situation in which the liquid level sensor arrangement comprises a float system including a float. The fact is that in such a situation, the action is useful to determine whether the float is functioning as intended or is stuck in some way and cannot move along with the liquid level.

An alternative way of determining presence or absence of a loose object in the container involves using the information received from the liquid level sensor arrangement to calculate a rate at which the liquid level changes as liquid flows out of the container according to the information received from the liquid flow meter arrangement, and assessing whether the rate is higher than a reference rate relating to a default situation of absence of a loose object at the same flow. If it is found that the rate is higher, indeed, this implies that the liquid level drops faster than may be expected under normal circumstances, and this may be taken as an indication of the presence of a loose object in the container in view of the fact that this is one of the likely causes of what appears to be going on with the liquid level. This way of determining presence or absence of a loose object in the container has the advantage that an object does not necessarily need to be in a detection range of the liquid level sensor arrangement in order to be discovered.

Yet another actual aspect of the container which can be determined by the processor is the container's capability to hold the liquid without leakage, in which case it is advantageous if the procedure of assessing the at least one actual aspect of the container includes determining whether or not a level change of the liquid in the container is zero under circumstances in which the information received from the liquid flow meter arrangement indicates that there is no flow of liquid from the container. When it is found that no liquid passes the liquid flow meter arrangement but still a level change of the liquid in the container is detected, this may imply that liquid is leaking from the container.

Besides the advantageous procedure of combining liquid level-related information and liquid flow-related information, it is possible that at least one of the two types of information is used separately for one or more purposes. For example, a situation is feasible in which the container is provided with at least one physical marking feature representing proper placement of the container in the beverage maker. In that case, it is practical if the liquid level sensor arrangement is further configured to detect the physical marking feature under circumstances of the physical marking feature being visible and to provide related positive detection information to the processor under those circumstances. Also, a situation is feasible in which the container is provided with at least one physical marking feature representing a critical level of the liquid in the container. In that case, it is practical if the liquid level sensor arrangement is further configured to detect the physical marking feature under circumstances of the physical marking feature being visible outside of the liquid in the container and to provide related positive detection information to the processor under those circumstances.

Another option which is covered by the invention, and which contributes to reliability and accuracy of assessing the at least one actual aspect of the container, is that the processor is further configured to process both the information received from the liquid level sensor arrangement and the information received from the liquid flow meter arrangement in a procedure of calibrating the liquid level sensor arrangement and the liquid flow meter arrangement against each other. Also, processing both the information received from the liquid level sensor arrangement and the information received from the liquid flow meter arrangement enables a check of proper functioning of both the liquid level sensor arrangement and the liquid flow meter arrangement, because it may be expected that unusual combinations of liquid level-related information and liquid flow-related information are obtained if something is wrong with one of the arrangements.

The invention covers the use of any suitable type of sensor in the liquid level sensor arrangement. Examples include a Hall effect sensor, a capacitive sensor, a time-of-flight sensor, an induction sensor, an optical sensor, an ultrasonic sensor, and a radar sensor. Further, it is possible that the liquid level sensor arrangement comprises a float system including a float, as suggested earlier, and/or a light guide if beneficial to operation of one or more sensors.

In a practical embodiment, the beverage maker further comprises a controller configured to control operation of the beverage maker, wherein the controller is in data communication with the processor for receiving information from the processor representing at least one actual aspect of the container, and wherein the controller is configured to take into account the information in a procedure of determining at least one aspect of operation control. For example, when the actual aspect of the container gives rise to warning a user of the beverage maker for the purpose of stimulating the user to bring about a change of the aspect, the controller is capable of realizing appropriate control of an element configured to provide the warning on the basis of the information received from the processor.

The invention covers beverage makers in which at least one container for holding a liquid is present. As suggested earlier, the beverage maker may be a coffee maker configured to perform a coffee making process, and the container may be one of a container configured to contain water for use in the coffee making process, a container configured to contain milk for use in the coffee making process, and a container configured to contain waste water. If the beverage maker comprises two or more containers, the invention may be applied to more than one of those containers, i.e., a combination of a liquid level sensor arrangement with a liquid flow meter arrangement may be assigned to more than one of those containers.

The above-described and other aspects of the invention will be apparent from and elucidated with reference to the following detailed description of a coffee maker and elements of the coffee maker, including a water container, a water level sensor arrangement configured to detect a level and/or a level change of the water in the water container, a water flow meter arrangement configured to measure at least one characteristic of an outgoing flow of the water, and a processor for receiving and processing information from both the water level sensor arrangement and the water flow meter arrangement.

### BRIEF DESCRIPTION OF THE DRAWINGS

The invention will now be explained in greater detail with reference to the figures, in which equal or similar parts are indicated by the same reference signs, and in which:
Figure 1 diagrammatically shows a perspective view of a coffee maker;
Figure 2 diagrammatically shows a water container, a water level sensor arrangement, a water flow meter arrangement and a processor of the coffee maker;
Figure 3 diagrammatically shows the water container, the water level sensor arrangement, the water flow meter arrangement and the processor of the coffee maker, and also an accessory positioned in the water container;
Figures 4 and 5 illustrate respective situations in which a foreign object is present in the water container; and
Figure 6 illustrates the optional use of a guided float in the water container.

### DETAILED DESCRIPTION OF EMBODIMENTS

The invention relates to a beverage maker comprising a container for holding a liquid, which liquid may be a beverage ingredient such as water, milk or waste water. Putting to practice the invention involves detection of a level and/or a level change of the liquid in the container, and also measurement of at least one characteristic of an outgoing flow of the liquid. The invention thereby enables assessment of at least one actual aspect of the container on the basis of a combination of liquid level-related information and liquid flow-related information. In the following, a coffee maker is described as an example of the beverage maker, and features of the invention are explained in the context of the coffee maker, which is not to be understood so as to mean that those features are intrinsically linked to this particular context. A coffee maker is a generally known device. In view thereof, and in view of the fact that the invention is mainly concerned with the container of the coffee maker, a detailed description of the coffee maker is omitted in the present text.

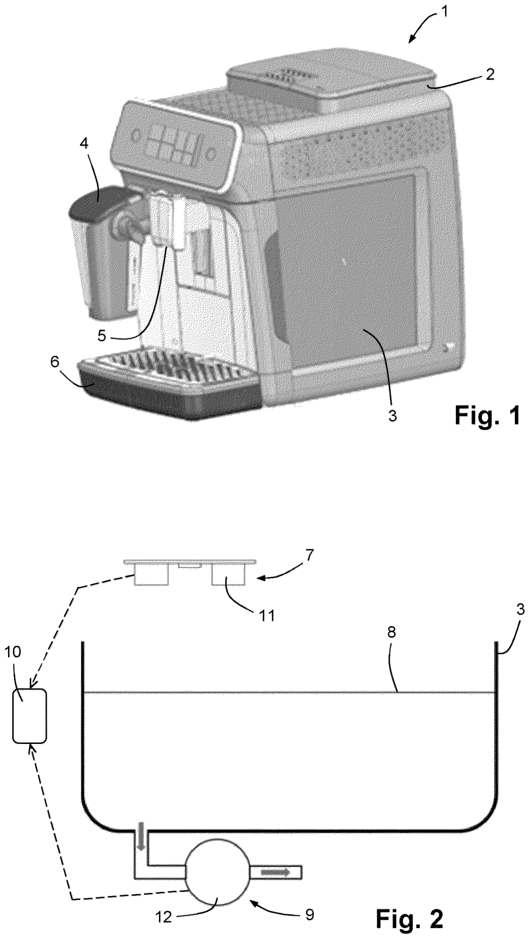

Figure 1 shows a practical example of a coffee maker 1. The coffee maker 1 comprises a reservoir 2 for holding coffee beans, a container 3 for holding water, and a container 4 for holding milk. When the coffee maker 1 is operated, a quantity of coffee beans is retrieved from the bean reservoir 2 and ground by means of a grinder. Further, water is taken from the water container 3, wherein a pump may be applied, and the water is heated by means of a suitable heater such as a thermoblock or a flow-through heater. Both the ground beans and the hot water are supplied to a brew chamber where the ground beans and the hot water are made to interact with each other in such a way that a coffee drink is obtained. The grinder, the heater, the pump and the brew chamber are not visible in the representation of the coffee maker 1 in figure 1. The coffee drink is dispensed from the coffee maker 1 through a spout 5. If so desired by a user of the coffee maker 1, milk in an appropriate condition, such as a hot and/or frothed condition, is added to the coffee drink from the milk container 4. The coffee maker 1 comprises a drip tray 6 which also serves as a support of a receptacle such as a cup for receiving the coffee drink and the optional milk.

According to the invention, the coffee maker 1 is equipped with elements configured to collect and process information about the water container 3, so that the coffee maker 1 is capable of performing one or more automated functions in relation to the water container 3, such as user warning functions and/or determine control parameters of operation of other elements as appropriate with one or more actual aspects of the water container 3. In this respect, figure 2 shows the water container 3 in a schematic fashion, and serves to illustrate the following elements of the coffee maker 1: a water level sensor arrangement 7 configured to detect a level 8 and/or a level change of the water in the water container 3, a water flow meter arrangement 9 configured to measure at least one characteristic of an outgoing flow of the water, and a processor 10 configured to receive and process information from both the water level sensor arrangement 7 and the water flow meter arrangement 9. Data signals between the processor 10 and the water level sensor arrangement 7 and the water flow meter arrangement 9, respectively, are represented through dashed lines. A flow of water draining from the water container 3 is represented through arrows.

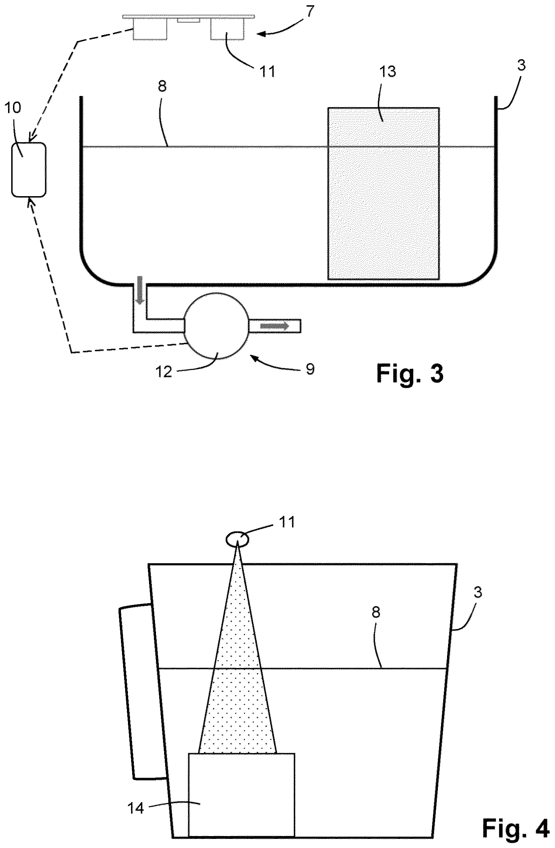

The water level sensor arrangement 7 comprises one or more sensors 11 of a suitable type, and the water flow meter arrangement 9 comprises a flow meter 12. On the basis of the presence of both the water level sensor arrangement 7 and the water flow meter arrangement 9 in the coffee maker 1, various interesting functions can be realized. Examples of such functions are introduced and explained in the following with reference to figures 3-6.

Figure 3 relates to optional use of an accessory 13 such as a water filter accessory with the water container 3, and shows the accessory 13 in position in the water container 3. Assuming that the coffee maker 1 is operated differently in situations with and without the accessory 13 in the water container 3, it is advantageous if an automated way of determining presence or absence of the accessory 13 in the water container 3 is provided, so that there is no need for a user action in order to set the appropriate operation mode of the coffee maker 1. The fact is that application of the water level sensor arrangement 7 and the water flow meter arrangement 9 enables such automated way of determining presence or absence of the accessory 13 in the water container 3, as will now be explained.

In the present example, the sensors 11 of the water level sensor arrangement 7 are positioned so as to detect an area of the water container 3 which is outside of an area where the accessory 13 is intended to be placed, so that the sensors 11 detect the water level 8 under all circumstances. Practical examples of the sensors 11 are time-of-flight sensors, working with electromagnetic, optical (e.g. laser, IR, LED) or ultrasonic signals, which are transmitted onto the water surface and at least partly reflected thereby. Based on the travel time of the reflected signal the sensor then calculates the distance between the sensor and the surface that reflected the signal. The water level sensor arrangement 7 is operated to provide output representing a level of the water in the water container 3, and the water flow meter arrangement 9 is operated at the same time to provide output relating to an outgoing flow of the water. On the basis of the size and shape of the water container 3 and the size and shape of the accessory 13, an expected level change of the water in the water container 3 for a reference flow of the water can be known for the respective situations of presence and absence of the accessory 13 in the water container 3. The fact is that for the same volume of water drained from the water container 3, the resulting water level 8 is lower when the accessory 13 is present. By comparing a detected level change for the reference flow of the water to the respective expected level changes, it is possible to establish whether or not the accessory 13 is present in the water container 3. In the process, a useful value is a ratio between level change and drained volume.

Using input from the water level sensor arrangement 7 and the water flow meter arrangement 9, the processor 10 is capable to determine more factors besides presence or absence of the accessory 13 in the water container 3, such as how much water is left in the water container 3 and how many servings are thus possible. Also, as an initial action, on the basis of input from the water level sensor arrangement 7, the processor 10 is capable to determine if the water container 3 is present or absent in the practical situation in which the water container 3 is removable from a housing of the coffee maker 1. In a situation in which the water container 3 is chosen from a range of accessories of different size and/or shape, the above-mentioned ratio between level change and drained volume can be used to identify the water container 3. Likewise, in a situation in which the accessory 13 is chosen from a range of accessories of different size and/or shape, the above-mentioned ratio between level change and drained volume can be used to identify the accessory 13. If both the water container 3 and the accessory 13 can be varied, combinations of water container 3 and accessory 13 can be identified as well.

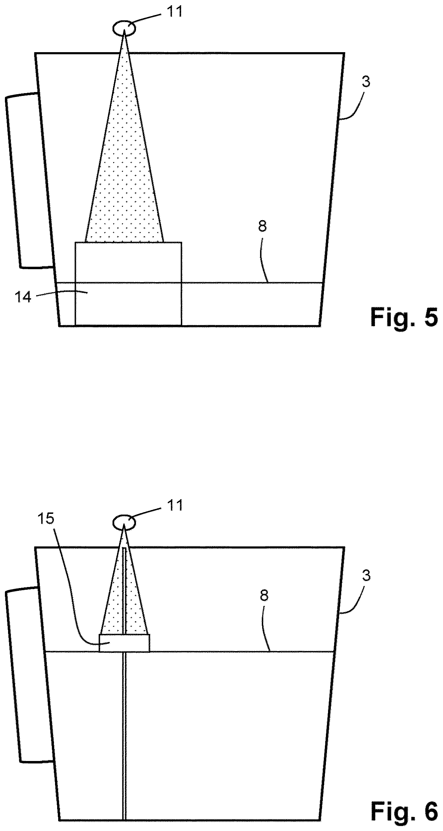

Figures 4 and 5 relate to a possible situation in which a loose object, e.g. a foreign object 14 is present in the water container 3. Application of the water level sensor arrangement 7 and the water flow meter arrangement 9 enables detection of the foreign object 14 in the water container 3, as will now be explained. Having a possibility to detect a foreign object 14 is practical and advantageous in that unexpected total emptying of the water container 3 can be avoided. It is understood that the coffee maker 1 can be equipped with a system for communicating a warning about a detected foreign object 14 to a user of the coffee maker 1. Figures 4 and 5 show the foreign object 14 in the water container 3, with figure 4 illustrating a situation in which the water in the water container 3 is above the foreign object 14, and with figure 5 illustrating a situation in which the water in the water container 3 is about halfway the foreign object 14.

In figures 4 and 5, a detection range of a sensor 11 of the water level sensor arrangement 7 is indicated as a dotted triangle. As explained in the foregoing, the sensor 11 may be of a type suitable for measuring a distance to a nearest surface, e.g. a time-of-flight sensor. In the shown example, the foreign object 14 rests on the bottom of the water container 3. This means that in a situation in which water is drained from the water container 3, the distance detected by the sensor 11 increases as long as the water level 8 is above the foreign object 14, and that the distance detected by the sensor 11 no longer changes from the moment the water level 8 passes a top surface of the foreign object 14, because the sensor 11 detects the top surface of the foreign object 14 instead of the water level 8. In a case in which the foreign object 14 floats in the water, something similar happens, as in that case, the distance detected by the sensor 11 increases as long as the foreign object 14 moves downwardly in the water container 3 along with the water, and the distance detected by the sensor 11 no longer changes from the moment the foreign object 14 has reached the bottom of the water container 3.

Having information available from both the water level sensor arrangement 7 and the water flow meter arrangement 9, it is possible that the processor 10 calculates a ratio of drained water volume and water level drop. As long as the water level 8 is higher than the top surface of the foreign object 14, no deviations are found in the ratio. However, as soon as the water level 8 drops below the top surface of the foreign object 14, an error occurs in the ratio, because there is still drained water volume but no longer a level drop. Thus, detection of a foreign object 14 in the water container 3 can be done by calculating the ratio of drained water volume and water level drop and therefore does not require application of a complicated system of sensors, image recognition, etc. It is to be noted that on the basis of the above-described method, it is also possible to find an accessory 13 which has not been properly put in place in the water container 3 and has moved from its intended position.

Figure 6 illustrates the optional use of a guided float 15 in the water container 3. With the float 15 being present in the detection range of the sensor 11, the above-described method is also suitable to be used to determine whether the float 15 is functioning as intended or is stuck in some way and cannot move along with the liquid level 8, because a stuck condition of the float 15 involves a fixed detected distance instead of an increasing detected distance as water is flowing out of the water container 3.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The terms "comprise" and "include" as used in this text will be understood by a person skilled in the art as covering the term "consist of'. Hence, the term "comprise" or "include" may in respect of an embodiment mean "consist of', but may in another embodiment mean "contain/have/be equipped with at least the defined species and optionally one or more other species".

Notable aspects of the invention are summarized as follows. In the context of beverage makers 1 comprising a container 3 for holding a liquid, a level 8 and/or a level change of the liquid in the container 3 is detected, and at least one characteristic of an outgoing flow of the liquid is also measured. The liquid level-related information and liquid flow-related information obtained in this way are combined in a procedure of assessing by means of a processor 10 at least one actual aspect of the container 3 such as presence or absence of an accessory 13 in the container 3.

## Claims

1. A beverage maker (1), comprising:
a container (3) configured to contain a liquid;
a liquid level sensor arrangement (7) configured to detect a level (8) and/or a level change of the liquid in the container (3);
a liquid flow meter arrangement (9) configured to measure at least one characteristic of an outgoing flow of the liquid; and
a processor (10) configured to receive information from the liquid level sensor arrangement (7) representing a detected level (8) and/or a detected level change of the liquid in the container (3), to receive information from the liquid flow meter arrangement (9) representing at least one measured characteristic of an outgoing flow of the liquid, and to process both the information received from the liquid level sensor arrangement (7) and the information received from the liquid flow meter arrangement (9) in a procedure of assessing at least one actual aspect of the container (3).

2. The beverage maker (1) as claimed in claim 1, wherein the procedure of assessing the at least one actual aspect of the container (3) includes calculating a value representing level change of the liquid in the container (3) per volume of drained liquid.

3. The beverage maker (1) as claimed in claim 2, wherein the container (3) is configured to accommodate an accessory (13), wherein the at least one actual aspect of the container (3) is presence or absence of the accessory (13) in the container (3), and wherein the procedure of assessing the at least one actual aspect of the container (3) further includes comparing the calculated value to a reference value related to the presence of the accessory (13) in the container (3) and/or a reference value related to the absence of the accessory (13) in the container (3).

4. The beverage maker (1) as claimed in claim 3, wherein the accessory (13) is a filter of the liquid.

5. The beverage maker (1) as claimed in claim 3 or 4, wherein the accessory (13) is one of a range of accessories of different size and/or shape, and wherein the procedure of assessing the at least one actual aspect of the container (3) further involves identifying the accessory (13) by comparing the calculated value to respective reference values related to respective accessories from the range.

6. The beverage maker (1) as claimed in any of claims 2-5, wherein the container (3) is one of a range of containers of different size and/or shape, and wherein the procedure of assessing the at least one actual aspect of the container (3) further involves identifying the container (3) by comparing the calculated value to respective reference values related to respective containers from the range.

7. The beverage maker (1) as claimed in any of claims 1-6, wherein the at least one actual aspect of the container (3) is presence or absence of a loose object (14) in the container (3), and wherein the procedure of assessing the at least one actual aspect of the container (3) includes determining whether or not a level change of the liquid in the container (3) is zero under circumstances in which the information received from the liquid flow meter arrangement (9) indicates an actual outgoing flow of the liquid or calculating a value representing a rate of a level change of the liquid in the container (3) and comparing the calculated value to a reference value related to the absence of a loose object (14) in the container (3).

8. The beverage maker (1) as claimed in any of claims 1-7, wherein the liquid level sensor arrangement (7) comprises a float system including a float (15), wherein the at least one actual aspect of the container (3) is proper functioning or stuck condition of the float (15), and wherein the procedure of assessing the at least one actual aspect of the container (3) includes determining whether or not a level change of the liquid in the container (3) is zero under circumstances in which the information received from the liquid flow meter arrangement (9) indicates an actual outgoing flow of the liquid.

9. The beverage maker (1) as claimed in any of claims 1-8, wherein the at least one actual aspect of the container (3) is the container's capability to hold the liquid without leakage, and wherein the procedure of assessing the at least one actual aspect of the container (3) includes determining whether or not a level change of the liquid in the container (3) is zero under circumstances in which the information received from the liquid flow meter arrangement (9) indicates that there is no flow of liquid from the container (3).

10. The beverage maker (1) as claimed in any of claims 1-9, wherein the container (3) is provided with at least one physical marking feature representing proper placement of the container (3) in the beverage maker (1), wherein the liquid level sensor arrangement (7) is further configured to detect the physical marking feature under circumstances of the physical marking feature being visible and to provide related positive detection information to the processor (10) under those circumstances.

11. The beverage maker (1) as claimed in any of claims 1-10, wherein the container (3) is provided with at least one physical marking feature representing a critical level of the liquid in the container (3), wherein the liquid level sensor arrangement (7) is further configured to detect the physical marking feature under circumstances of the physical marking feature being visible outside of the liquid in the container (3) and to provide related positive detection information to the processor (10) under those circumstances.

12. The beverage maker (1) as claimed in any of claims 1-11, wherein the processor (10) is further configured to process both the information received from the liquid level sensor arrangement (7) and the information received from the liquid flow meter arrangement (9) in a procedure of calibrating the liquid level sensor arrangement (7) and the liquid flow meter arrangement (9) against each other.

13. The beverage maker (1) as claimed in any of claims 1-12, wherein the liquid level sensor arrangement (7) comprises at least one of
a Hall effect sensor;
a capacitive sensor;
a time-of-flight sensor;
an induction sensor;
an optical sensor;
an ultrasonic sensor;
a radar sensor;
a float system including a float (15); and
a light guide.

14. The beverage maker (1) as claimed in any of claims 1-13, further comprising a controller configured to control operation of the beverage maker (1), wherein the controller is in data communication with the processor (10) for receiving information from the processor (10) representing at least one actual aspect of the container (3), and wherein the controller is configured to take into account the information in a procedure of determining at least one aspect of operation control.

15. The beverage maker (1) as claimed in any of claims 1-14, being a coffee maker configured to perform a coffee making process, wherein the container is one of a container (3) configured to contain water for use in the coffee making process, a container (4) configured to contain milk for use in the coffee making process, and a container (6) configured to contain waste water.
